# EUROPÄISCHE PATENTSCHRIFT

(11) **EP 2 400 474 B1**
(45) Veröffentlichungstag und Bekanntmachung des Hinweises auf die Patenterteilung: **13.12.2017**
(21) Anmeldenummer: 11181889.4
(22) Anmeldetag: 10.01.2009
(51) Int. Cl.: G08G 5/00, H04B 7/185

(54) **Anordnung und Verfahren zur Flugsicherung und/oder Flugleitung von Luftfahrzeugen**
Arrangement and method for flight security and/or air traffic control of aircraft
Sytème et méthode pour assurer la securité des vols et/ou contrôler le trafic d'un aéroplane

(30) Priorität: 10.03.2008 DE 102008013357
(43) Veröffentlichungstag der Anmeldung: 28.12.2011
(62) Teilanmeldung aus: 09719779.2
(73) Patentinhaber: Thales Alenia Space Deutschland GmbH, 71254 Ditzingen (DE)
(72) Erfinder: Blomenhofer, Helmut Dr., 88690 Uhldingen (DE); Neufeldt, Holger Dr., 71665 Vaihingen/Enz (DE)
(74) Vertreter: Michalski Hüttermann & Partner Patentanwälte mbB

(56) Entgegenhaltungen:
- EP-A2- 1 906 204
- EP-A2- 2 056 272
- EP-A2- 2 590 341
- DE-A1-102005 031 439
- US-A- 6 044 323
- GEROLD ADRIAN: "ADS-B: Will It Be Filled In?", INTERNET CITATION, März 2006 (2006-03), Seiten 1-3, XP002570126, Gefunden im Internet: URL:http://www.aviationtoday.com/av/catego ries/commercial/ADS-B-Will-It-B e-Filled-In_791.html [gefunden am 2010-02-17]
- PIERRE GAYRAUD: "Enabling technologies Content", ASAS-TN SEMINAR, BRIGHTON, 13 October 2004 (2004-10-13), XP055228646,
- Greg Dunstone: "ADS-B Introduction / Tutorial", APANPIRG ADS-B TASK FORCE SEMINAR, Nadi, Fiji, 25 October 2005 (2005-10-25), pages 1-61, XP055228650,

## Beschreibung

Die vorliegende Erfindung betrifft eine Anordnung zur Flugsicherung und/oder Flugleitung von Luftfahrzeugen, wobei die Anordnung zum Einsatz einer Automatic Dependent Surveillance-Broadcast, ADS-B, Überwachung ausgebildet ist. Die Anordnung umfasst mehrere zueinander beabstandete Empfangsstationen, die jeweils zum Empfangen eines Broadcast-Signals ausgebildet sind, das von einem zu sichernden und/oder zu leitenden Luftfahrzeug ausgesandt wurde. Ferner umfasst die Anordnung Verarbeitungsmittel zum Verarbeiten des empfangenen Broadcast-Signals.

Die Erfindung betrifft auch ein Verfahren zur Flugsicherung und/oder Flugleitung von Luftfahrzeugen mittels einer ADS-B Flugsicherungs- und/oder Flugleitungsanordnung der oben genannten Art.

Aus dem Stand der Technik ist unter der Bezeichnung Automatic Dependent Surveillance - Broadcast (ADS-B) eine Flugsicherungs- und/oder Flugleitungsanordnung bekannt (vgl. den Standard RTCA Do-260A vom 10. April 2003 Minimum Operational Performance Standard for 1090 MHz Extended Squitter Automatic Dependent Surveillance - Broadcast (ADS-B) and Traffic Information Services - Broadcast (TIS-B), Volume I (Main Part) and Volume II (Appendices)"). Unter ADS-B sendet ein Luftfahrzeug von sich aus, d. h. ohne dazu von extern veranlasst worden zu sein, periodisch seine Identifikation, Position, Geschwindigkeit und Flugrichtung, sowie weitere Informationen als Broadcast-Signal aus. Dazu ist in dem Luftfahrzeug mindestens eine geeignete Sendestation (ein sogenannter Mode S Extended Squitter) angeordnet. Zudem verfügt das Luftfahrzeug über geeignete Rechenmittel, um die auszusendenden Daten im Luftfahrzeug zu ermitteln, zu sammeln, ggf. vorzuverarbeiten und für die Übermittlung als Broadcast-Signal aufzubereiten. Das Broadcast-Signal wird vorzugsweise zwei Mal pro Sekunde wiederholt.

Am Boden der bekannten ADS-B Flugsicherungs- und/oder Flugleitungsanordnung sind mehrere zueinander beabstandete Empfangsstationen angeordnet, die das Broadcast-Signal der Mode S Extended Squitter der Luftfahrzeuge empfangen können. Die in dem Broadcast-Signal enthaltenen Daten und Informationen werden an eine Flugsicherungs- und/oder Flugleitungszentrale weitergeleitet, wo sie empfangen, gegebenenfalls verarbeitet und aufbereitet und dann Nutzern zur Verfügung gestellt werden können. Die in der Flugsicherungs- und/oder Flugleitungszentrale vorliegenden Daten der einzelnen Luftfahrzeuge können für Flugsicherungs- und/oder Flugleitungsmaßnahmen herangezogen werden.

Die Positionsinformationen eines Luftfahrzeugs stammen von einer beliebigen Quelle für weltweite Navigation, wie beispielsweise von Global Positioning System (GPS) Satelliten, an Bord des Luftfahrzeugs. Selbstverständlich können auch andere satellitengestützte Positionsbestimmungssysteme (z.B. GLONASS (russisch), Euteltracs (europäisch, insbesondere für Fernverkehr), Galileo (europäisch), MTSAT (japanisch) oder Compass (chinesisch)) zur Positionsbestimmung des Luftfahrzeugs eingesetzt werden.

Das Broadcast-Signal eines Luftfahrzeugs kann auch von anderen Luftfahrzeugen in Reichweite des Broadcast-Signals empfangen werden, falls diese über eine geeignete Empfangsstation verfügen. In jedem Luftfahrzeug können somit Fluginformationen von anderen Luftfahrzeugen in der Umgebung vorliegen, die an den Piloten ausgegeben und zur Vermeidung von Zusammenstößen genutzt werden können.

Die aus dem Stand der Technik bekannte bodengestützte ADS-B Anordnung der Flugsicherung zur Anzeige der Flugbewegungen im Luftraum steht jedoch nur in den Regionen zur Verfügung, die eine ausreichende Abdeckung mit geeigneten Empfangsstationen aufweisen. Die am Boden angeordneten Empfangsstationen haben in Abhängigkeit von der Flughöhe (z.B. 10000 Meter) des Luftfahrzeugs eine Reichweite von bis zu 400 Kilometern entlang einer Quasi-Sichtlinie zum Luftfahrzeug, so dass sie jeweils einen in etwa kreisförmigen Empfangsbereich mit einem Durchmesser von bis zu 800 Kilometern abdecken können. Um ADS-B in großen Regionen flächendeckend auch für niedrige Flughöhen zur Verfügung stellen zu können, bedarf es einer Vielzahl von ADS-B Boden-Empfangsstationen. Zudem gestaltet sich die Anordnung von ADS-B Bodenstationen in unwegsamem und abgelegenem Gelände als aufwändig. Insbesondere in ozeanischen Gebieten und/oder in sehr entfernt gelegenen und dünn besiedelten Gebieten (z.B. Polregionen, Feuerland, etc.) ist eine vollständige globale Überwachung mit Radaranlagen und/oder ADS-B Bodenstationen unmöglich oder nicht sinnvoll.

Ein Luftfahrzeug, das beispielsweise aus der Karibik nach Portugal fliegt, verlässt schon wenige Meilen nach der Küste die Reichweite der heutigen Radarüberwachung und ist dann nur noch über Funk mit den verschiedenen Flugsicherungen verbunden. Erst kurz vor Erreichen der portugiesischen Azoren wird es nach längerer Zeit wieder von einem Flugsicherungsradar erfasst, wenn es z.B. in den Flugüberwachungsbereich der portugiesischen Flugsicherung (NAV Portugal bzw. FIR Lisboa) eingetreten ist.

Zudem bewirkt eine nicht-homogene Flugsicherungsinfrastruktur zwischen den gut ausgestatteten Lufträumen (z.B. USA und Europa) und den Lufträumen, in welchen nur prozedurales ATM (Air Traffic Management) möglich ist, eine Reduzierung der ATM Kapazitäten auch in den gut ausgestatteten Lufträumen. Dies geschieht, da internationale Luftfahrzeuge bei der Flugleitung Vorrang gegenüber regionalen Luftfahrzeugen haben müssen. Die Ankündigung des Eintritts eines oder mehrerer internationaler Luftfahrzeuge in den Überwachungsbereich geschieht erst kurz vor dessen Erreichen und hat Auswirkungen auf zumindest einen Teil des regionalen Flugverkehrs. Eine Planung der Flugleitung des regionalen Flugverkehrs ist nicht möglich, da nicht bekannt ist, wann genau internationale Luftfahrzeuge aus nicht Radar- oder ADS-B-überwachten Regionen (Meere oder Ozeane) in den Überwachungsbereich der Flugsicherungsbehörde eintreten.

In der Offenlegungsschrift zu der älteren nachveröffentlichten europäischen Patentanmeldung 2 056 272 ist ein Verfahren zur Übertragung von Nachrichten in einem System zur automatischen bordabhängigen Überwachung von ADS-B-Übertragungen mit folgenden Schritten beschrieben: Erfassen, dass ein neues Ziel in einen kontrollierten Luftraum eingedrungen ist; Identifizieren entsprechender Kunden für das neue Ziel; Auswählen eines ersten Satzes von Bodenstationen, die Bodenstationen aufweisen, deren Übertragungen von gesendeten Nachrichten durch jeden der entsprechenden Kunden zufriedenstellend empfangen werden; Berechnen eines zweiten Satzes von Bodenstationen aus zumindest dem ersten Satz von Bodenstationen, wobei der zweite Satz von Bodenstationen weniger Bodenstationen aufweist als eine Anzahl von Bodenstationen in dem ersten Satz von Bodenstationen, und der zweite Satz Bodenstationen ausreichend ist, um alle relevanten Kunden über die gesendeten Nachrichten zu erreichen; und Übertragen von Nachrichten mit Informationen über das neue Ziel nur von den Bodenstationen in dem zweiten Satz von Bodenstationen. Im Übrigen wird in diesem Dokument beschrieben, ADS-B-Signale über einen Satelliten weiterzuleiten.

Ausgehend von dem beschriebenen Stand der Technik liegt der vorliegenden Erfindung also die Aufgabe zugrunde, die Flugsicherung und die Flugleitung auf Grundlage von Broadcast-Signalen mit möglichst geringem Aufwand und möglichst geringen Kosten weltweit flächendeckend zur Verfügung zu stellen, damit die Flugsicherung und Flugleitung möglichst langfristig und damit auch möglichst sicher und zuverlässig geplant werden kann.

Diese Aufgabe wird durch die Gegenstände der unabhängigen Ansprüche gelöst. Bevorzugte Weiterbildungen sind in den Unteransprüchen beschrieben.

Die vorliegende Erfindung betrifft Luftfahrzeuge aller Art, welche ein beliebiges Broadcast-Signal aussenden und mit einem oder mehreren geeigneten Sendern ausgestattet sind: zivile und militärische Luftfahrzeuge aller Art, beispielsweise Transportflugzeuge, Flugzeuge der allgemeinen Luftfahrt, bemannte und auch unbemannte Luftfahrzeuge und Luftfahrtsysteme.

Die vorliegende Erfindung ermöglicht eine weltraumbasierte Flugsicherung, Flugüberwachung und/oder Flugleitung, indem satellitengestützte Empfangsstationen eingesetzt werden, die das von den Luftfahrzeugen ausgesandte Broadcast-Signal empfangen. Die Empfangsstationen müssen nicht Bestandteil eines eigenen Satelliten sein, sondern können beispielsweise in Form eines so genannten Piggy Packs an einem Satelliten, der eigentlich für andere Aufgaben dient (zum Beispiel zur Informationsübermittlung, zur weltweiten Positionsbestimmung und/oder Ortung von Luft-, Land- oder Wasserfahrzeugen etc.), befestigt werden.

Die Satelliten-Empfangsstationen können als alleinige Empfangsstationen der erfindungsgemäßen Flugsicherungs- und/oder Flugleitungsanordnung ausgebildet sein, auf bodenbasierte Empfangsstationen kann dann verzichtet werden. Alternativ können die Satelliten-Empfangsstationen auch zur Ergänzung einer bestehenden Infrastruktur mit bodenbasierten Empfangsstationen dienen, wobei die Satelliten-Empfangsstationen vorzugsweise Regionen abdecken, in denen keine Boden-Empfangsstationen angeordnet sind.

Das von den Empfangsstationen empfangene Broadcast-Signal eines Luftfahrzeugs kann vorverarbeitet und/oder für die Übertragung an die Flugsicherungs- und/oder Flugleitungszentrale aufbereitet werden. Zumindest ein Teil der in dem empfangenen Broadcast-Signal enthaltenen Daten und Informationen wird von der Satelliten-Empfangsstation an eine oder mehrere Satelliten-Bodenkontrollstationen übermittelt, dort verarbeitet und anschließend an die Flugsicherungs- und/oder Flugleitungszentrale oder andere berechtigte Organisationen (z.B. Airlines, Flughäfen, etc.) weitergeleitet. Die das Satelliten-Signal empfangende Bodenkontrollstation übermittelt die Daten an die Flugsicherungs- und/oder Flugleitungszentrale oder an die anderen berechtigten Organisationen über Leitungen oder auf anderem Wege, bspw. über eine Funkverbindung.

Die Verbindung zwischen der Satelliten-Empfangsstation, die das Broadcast-Signal von dem zu sichernden und/oder zu leitenden Luftfahrzeug empfangen hat, und der Satelliten-Bodenkontrollstation muss nicht direkt erfolgen. Es ist denkbar, dass die Verbindung zwischen der Satellitenstation und der Bodenkontrollstation über geeignete Relaisstationen, insbesondere in Form von Satelliten-Relaisstationen, erfolgt (sog. Inter-Satellite-Links). Das hat den Vorteil, dass Signal-Verspätungen reduziert werden.

Mit der vorliegenden Erfindung ist es möglich, auf besonders einfache und kostengünstige Weise eine globale Abdeckung zum Zwecke der Flugsicherung, Flugüberwachung und/oder Flugleitung mittels Broadcast-Signalen zu erzielen. Insbesondere die Regionen über Meeren und Ozeanen, aber auch Regionen mit dichtem Urwald, steilen Gebirgen oder großen Wüsten können dank der Erfindung flächendeckend bis in niedrige Höhen überwacht werden. Das hat den Vorteil, dass beispielsweise Luftfahrzeuge auf ihrem Flug aus Mittel- oder Südamerika nach Europa während des Überflugs des atlantischen Ozeans ständig überwacht werden können, obwohl dort keine Boden-Empfangsstationen vorhanden sind. Dadurch können bspw. der Flugsicherungsbehörde von Portugal (NAV Portugal), die für den Anflug über den Atlantik aus Mittel- und Südamerika zuständig ist, frühzeitig Informationen über die internationalen Luftfahrzeuge auf dem Weg nach Europa zur Verfügung gestellt werden. Der Luftbehörde von Portugal ist es somit möglich, bereits lange vor dem Erreichen des portugiesischen Überwachungsbereichs ein internationales Luftfahrzeug in die Planung der Flugsicherungs- und/oder Flugleitungsaktivitäten mit einzubeziehen, so dass regionale Luftfahrzeuge frühzeitig und vorausschauend geleitet werden können. Dadurch wird die Flugsicherung, insbesondere im Hinblick auf die Berücksichtigung sowohl regionaler als auch internationaler Luftfahrzeuge mit Priorisierung der internationalen Luftfahrzeuge, zeitlich entzerrt, wodurch die Effizienz, Sicherheit und Zuverlässigkeit der Flugsicherungs- und/oder Flugleitungsaktivitäten und damit die Kapazität für die Luftverkehrskontrolle deutlich verbessert werden kann. Außerdem können die erforderlichen Umleitungen von nationalen Luftfahrzeugen auf ein Minimum reduziert werden, wodurch sich eine Einsparung an Kraftstoff und eine Verringerung von Lärm und Abgasen ergibt.

Ein weiterer Vorteil der erfindungsgemäßen Flugsicherungs- und Flugleitungsanordnung ist darin zu sehen, dass nunmehr während des gesamten Flugs eines Luftfahrzeugs, insbesondere auch während des Flugs über Regionen, in denen keine Radarabdeckung gegeben ist und keine ADS-B Boden-Empfangsstationen angeordnet sind, Informationen über das Flugzeug und seine Flugroute zur Verfügung stehen. Diese Informationen können Dritten kostenlos oder gegen Zahlung eines Entgelts zur Verfügung gestellt werden. So ist es beispielsweise denkbar, dass Luftfahrtlinien über die aktuelle Position ihrer Luftfahrzeuge informiert sind. Aber auch für Flughäfen können diese zusätzlich zur Verfügung stehenden Informationen interessant sein, da sie diese Informationen zur Online-Aktualisierung der Ankunfts- und/oder Abflugpläne nutzen können.

Ein weiterer Vorteil der vorliegenden Erfindung ist darin zu sehen, dass die satellitengestützten Empfangsstationen der erfindungsgemäßen Flugsicherungs- und/oder Flugleitungsanordnung einen wesentlich größeren Abdeckungsbereich umfassen als die bekannten bodenbasierten Empfangsstationen. Eine Radarüberwachung des Luftraums ist teuer, was der Hauptgrund dafür ist, dass Radaranlagen zur Flugüberwachung derzeit nur einen kleinen Teil der Welt (der Erfinder schätzt weniger als 5% der Landmassen) abdecken. ADS-B Boden-Empfangsstationen haben aufgrund der Erdkrümmung nur einen relativ beschränkten Überwachungsbereich. Zur flächendeckenden Abdeckung des oberen Luftraums von Australien, der einer Überwachung des Luftraums oberhalb von 30000 Fuß entspricht, genügen etwa 30 ADS-B Bodenstationen. Für eine flächendeckende Überwachung des gesamten Flugverkehrs in den USA werden aber ca. 1500 ADS-B Boden-Empfangsstationen benötigt und müssen verteilt über die gesamte USA errichtet und eingesetzt werden.

Durch die Verlagerung der Empfangsstationen in das Weltall kann der Überwachungsbereich einer einzelnen Empfangsstation deutlich vergrößert werden, so dass die Anzahl der erforderlichen Empfangsstationen zur Realisierung einer Luftraumüberwachung in einer bestimmten Region reduziert werden kann. Zudem erlauben die Satelliten-Empfangsstationen nicht nur eine Überwachung des oberen Luftraums (oberhalb von Flight Level FL200 bzw. FL300), sondern eine Luftraumüberwachung bis in niedrige Flughöhen und auch bis zum Boden (sog. FL0). Das bedeutet, dass mit der erfindungsgemäßen Flugsicherungs- und/oder Flugleitungsanordnung mit einem relativ geringen Aufwand eine Flugsicherung und/oder Flugleitung bis hinab auf FL0 erreicht werden kann. Ziel der Erfindung ist es insbesondere, mittels satellitengestützten ADS-B Empfangsstationen eine weltweite ADS-B Abdeckung zu realisieren, so dass eine weltweite Flugraumüberwachung ohne Radar- und/oder ADS-B Bodenstationen möglich ist.

Zur Realisierung der vorliegenden Erfindung wird eine Konstellation mehrerer die Erde erdnah umkreisender Satelliten benötigt, da das von den Luftfahrzeugen ausgesandte Broadcast-Signal nur eine beschränkte Reichweite hat. Darüber hinaus wird das Broadcast-Signal in den Luftfahrzeugen derzeit nur nach unten, nach vorne und nach hinten (aber nicht nach oben) abgestrahlt. Das bedeutet, dass das Broadcast-Signal von direkt oberhalb des Luftfahrzeugs positionierten Satelliten eher schlecht empfangen werden kann. Zum Empfang des Broadcast-Signals werden deshalb vorzugsweise schräg über dem Luftfahrzeug angeordnete, insbesondere am Horizont stehende Satelliten Empfangsstationen herangezogen. Selbstverständlich ist es aber denkbar, dass Luftfahrzeuge in Zukunft auch mit Sendern ausgestattet werden, welche das Broadcast-Signal nach oben abstrahlen, insbesondere wenn sich das erfindungsgemäß vorgeschlagene satellitenbasierte Überwachungssystem durchsetzen sollte. Zumindest wenn die Sendestationen an der Oberseite von Luftfahrzeugen angeordnet sind, ist der Empfang der Broadcast-Signale eines Luftfahrzeugs von direkt oberhalb des Luftfahrzeugs stehenden Satelliten problemlos möglich.

Auch die Frequenzen und die Sendeleistung der Broadcast-Signal können sich in zukünftigen ADS-B Systemen gegenüber heutigen Überwachungssystemen ändern. Das Prinzip des unadressierten, periodischen Abstrahlens des Broadcast-Signals bleibt aber auch in zukünftigen ADS-B Systemen erhalten.

Es wird vorgeschlagen, dass die Satelliten-Empfangsstationen in einer Umlaufbahn von unter 3000 km oberhalb der Erdoberfläche die Erde umlaufen. Gemäß dieser Weiterbildung werden also keine geostationären Satelliten eingesetzt, da deren Umlaufbahn einen relativ großen Abstand zur Erdoberfläche aufweist (ca. 36000 km), sondern erdnahe Satelliten. Vorzugsweise sind die Satelliten-Empfangsstationen Bestandteil von so genannten Low Earth Orbit (LEO)-Satelliten. Diese Satelliten sind in einer Umlaufbahn von etwa 160 - 2000 km oberhalb der Erdoberfläche positioniert. Insbesondere könnten die Empfangsstationen in Satelliten in einer Umlaufbahn von etwa 600 - 900 km oberhalb der Erdoberfläche eingesetzt werden. Entscheidend ist dabei, dass das von den Sendestationen der Luftfahrzeuge ausgesandte Broadcast-Signal von den Satelliten-Empfangsstationen (auch unter ungünstigen Bedingungen) noch sicher und zuverlässig empfangen werden kann. Es wird aber betont, dass die vorliegende Erfindung mit beliebigen Satelliten realisiert werden kann und nicht auf Satelliten einer bestimmten Umlaufbahn beschränkt ist. Falls das herkömmliche Broadcast-Signal von Satelliten in höheren Umlaufbahnen nur schwach empfangen werden kann, wäre es denkbar, dass die Luftfahrzeuge ein gegenüber dem herkömmlichen Signal verstärktes Broadcast-Signal mit einer höheren Sendeleistung aussenden oder die Sender in den Luftfahrzeugen derart positioniert werden, bspw. an der Oberseite der Luftfahrzeuge, dass der Empfang des Broadcast-Signals durch Satelliten-Empfangsstationen verbessert wird und somit auch von Satelliten in mittleren Umlaufbahnen (z.B. Galileo-Satelliten) und von geostationären Satelliten problemlos empfangen werden kann.

Es ist vorteilhaft, wenn die Satelliten-Empfangsstationen derart um die Erde umlaufen, dass deren Empfangsbereiche zumindest zeitweise geografische Regionen abdecken, die lediglich unzureichend mit Boden-Empfangsstationen abgedeckt sind. Vorteilhafterweise laufen die Satelliten-Empfangsstationen derart um die Erde, dass deren Empfangsbereiche auch Meer-, Gebirgs-, Urwald- und/oder Wüstenregionen abdecken.

Die Satelliten-Empfangsstationen sind vorzugsweise derart ausgebildet, dass sie ein Broadcast-Signal einer als Mode S 1090 MHz Extended Squitter ausgebildeten Sendestation eines zu sichernden und/oder zu leitenden Luftfahrzeugs empfangen. Zusätzlich können die Satelliten-Empfangsstationen auch derart ausgebildet sein, dass sie ein 978 MHz Universal Access Transceiver (UAT)-Signal empfangen. Schließlich können die Satelliten-Empfangsstationen zusätzlich auch derart ausgebildet sein, dass sie ein VHF Data Link Mode 4 (VDLM 4)-Signal im Frequenzband 108 bis 137 MHz empfangen.

Erfindungsgemäß ist vorgesehen, dass die Satelliten-Empfangsstationen mindestens eine Sendeeinheit aufweisen, die ein weiteres Broadcast-Signal mit Informationen über die Position von Luftfahrzeugen sendet. Dadurch kann ein so genannter Traffic Information Services-Broadcast (TIS-B) realisiert werden, durch den mit ADS-B ausgestattete Luftfahrzeuge mit einem vollständigeren Abbild des sie umgebenden Luftraums vorsorgt werden können. TIS-B ist ein Dienst, der mit ADS-B ausgestattete Luftfahrzeuge mit Überwachungsdaten über nicht mit ADS-B ausgestattete Luftfahrzeuge versorgt. TIS-B umfasst Überwachungsinformationen, die von einer oder mehreren Überwachungsquellen, wie beispielsweise von einem Überwachungsradar, zur Verfügung gestellt werden. Die Überwachungsinformationen werden verarbeitet und konvertiert, damit sie von mit ADS-B ausgestatteten Luftfahrzeugen genutzt werden können.

TIS-B kann auch in ADS-B Anwendungen umfassend mehrere ADS-B Datenverbindungen genutzt werden, um eine Quervernetzung oder eine Gateway-Funktion zwischen den mit ADS-B ausgestatteten Luftfahrzeugen unter Verwendung der verschiedenen Datenverbindungen zur Verfügung zu stellen. Diese TIS-B Unterfunktion wird auch als Automatic Dependent Surveillance-Rebroadcast (ADS-R) bezeichnet. Zwei Kommunikationsverbindungsprotokolle wurden bisher für den Einsatz in ADS-R Anwendungen genehmigt. Universal Access Transceiver (UAT), das meistens von Kleinluftfahrzeugen eingesetzt wird, und das 1090 MHz Mode S Extended Squitter (1090 ES), das üblicherweise in Luftfahrzeugen für den kommerziellen Einsatz verwendet wird.

Um ein Abhören und Weiterverwerten des Broadcast-Signals durch Unbefugte zu vermeiden, können die Satelliten-Empfangsstationen Mittel zum Entschlüsseln eines von der Sendestation des zu sichernden und/oder zu leitenden Luftfahrzeugs verschlüsselt ausgesandten Broadcast-Signals aufweisen. Die verschlüsselte Übermittlung des Broadcast-Signals kann eine mögliche Weiterentwicklung im Rahmen von ADS-B darstellen. Gemäß dieser Ausführungsform können die Broadcast Signale nicht von beliebigen Empfangsstationen empfangen bzw. die darin enthaltenen Informationen extrahiert werden. Vielmehr wird das Broadcast-Signal verschlüsselt ausgesandt, so dass es nur von mit entsprechenden Entschlüsselungsmechanismen ausgestatteten Empfangsstationen empfangen und entschlüsselt werden kann.

Um ein Abhören der über die Funkübertragungsstrecke zwischen der Satelliten-Empfangsstation, die das Broadcast-Signal empfangen hat, und den Satelliten-Bodenkontrollstationen übertragenen Daten durch unbefugte Dritte zu verhindern, wird vorgeschlagen, dass die Satelliten-Empfangsstationen Mittel zum Verschlüsseln der an die Flugsicherungs- und/oder Flugleitungszentrale weiterzuleitenden Daten des Broadcast-Signals aufweisen. Die verschlüsselten Daten werden von der Satelliten-Empfangsstation entweder unmittelbar oder mittelbar über Relaisstationen an eine der Satelliten-Bodenkontrollstationen übermittelt.

Es wird vorgeschlagen, dass die in dem von der mindestens einen Satelliten-Empfangsstation empfangenen Broadcast-Signal enthaltenen Daten Dritten, insbesondere einer Fluglinie des zu sichernden und/oder zu leitenden Luftfahrzeugs, Flugsicherungs- und/oder Flugleitungsbehörden und Flughäfen, zur Verfügung gestellt werden. Auf diese Weise verfügt bspw. die Fluglinie stets über aktuelle Positions- und Zustandsinformationen für alle ihre Luftfahrzeuge beziehungsweise für die ADS-B-fähigen Luftfahrzeuge. Damit kann die Fluglinie den Einsatz und die Verfügbarkeit ihrer Luftfahrzeuge wesentlich besser kontrollieren und steuern als dies bisher möglich war. Dadurch kann die Effizienz der Luftfahrzeuge gesteigert werden. Dies ist erst mit der vorliegenden Erfindung möglich, da erst durch diese Erfindung überhaupt eine globale Überwachung des Flugverkehrs, insbesondere im Bereich der Meere und Ozeane und auch der Polregionen, möglich ist.

Anliegend werden anhand der Figuren bevorzugte Ausführungsbeispiele der vorliegenden Erfindung näher erläutert. Es zeigen:
- Figur 1: eine schematische Ansicht einer erfindungsgemäßen Flugsicherungs- und/oder Flugleitungsanordnung gemäß einer ersten bevorzugten Ausführungsform;
- Figur 2: eine schematische Ansicht einer erfindungsgemäßen Flugsicherungs- und/oder Flugleitungsanordnung gemäß einer zweiten bevorzugten Ausführungsform; und
- Figur 3: eine aus dem Stand der Technik bekannte Flugsicherungs- und/oder Flugleitungsanordnung in schematischer Ansicht.

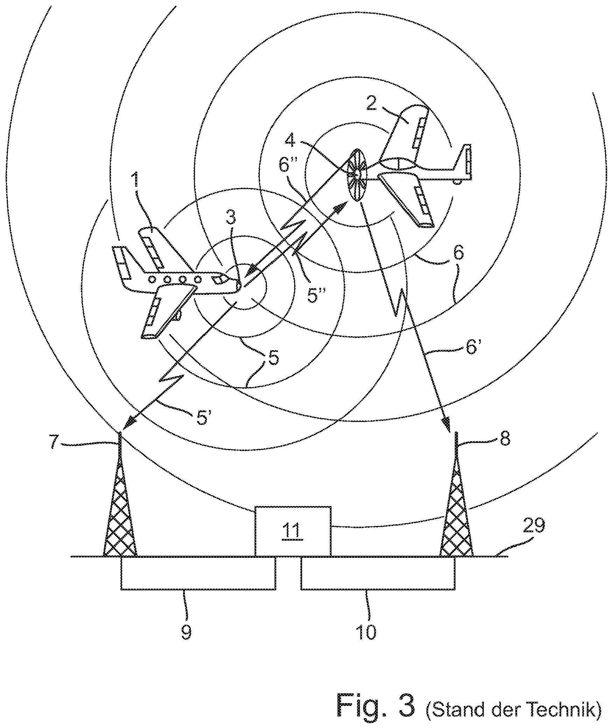

Figur 3 zeigt eine aus dem Stand der Technik bekannte Flugsicherungs- und/oder Flugleitungsanordnung. Die Anordnung dient zur Flugsicherung und/oder Flugleitung von Luftfahrzeugen 1, 2, insbesondere Flugzeugen. In den Luftfahrzeugen 1, 2 ist jeweils mindestens eine Sendestation 3, 4 angeordnet. Die Sendestationen 3, 4 senden regelmäßig ein Broadcast-Signal, bei dem dargestellten Ausführungsbeispiel in Form eines 1090 MHz Mode S Extended Squitter Signals (1090 ES), das von beliebigen Empfangsstationen empfangen werden kann. Zur Veranschaulichung der Broadcast-Eigenschaften des 1090 ES-Signals sind in Figur 3 um die Sendestationen 3, 4 herum konzentrische Kreise eingezeichnet. Diese Kreise entsprechen einem ersten 1090 ES-Signal 5 einer ersten Sendestation 3 und einem zweiten 1090 ES-Signal 6 einer zweiten Sendestation 4. Eine solche Flugsicherungs- und/oder Flugleitungsanordnung ist im Stand der Technik unter der Bezeichnung Automatic Dependent Surveillance-Broadcast (ADS-B) bekannt.

Die bekannte ADS-B Anordnung umfasst des Weiteren mehrere zueinander beabstandete, am Boden angeordnete Empfangsstationen, von denen in Figur 3 beispielhaft lediglich zwei Empfangsstationen 7, 8 dargestellt sind. Die Empfangsstationen 7, 8 stehen über Verbindungsleitungen 9, 10 mit einer Flugsicherungs- und/oder Flugleitungszentrale 11 in Verbindung. Alternativ oder zusätzlich können die Empfangsstationen 7, 8 auch über Funk oder auf beliebig andere Weise mit der Flugsicherungs- und/oder Flugleitungszentrale 11 in Verbindung stehen. Die Zentrale 11 wird von einer nationalen beziehungsweise regionalen Flugsicherungsbehörde, beispielsweise der deutschen Flugsicherung (DFS) oder der Maastricht Upper Area Control (MUAC), betrieben beziehungsweise verwaltet.

Die Luftfahrzeuge 1, 2 senden - wie gesagt - regelmäßig, auf eigene Veranlassung und ohne eine spezielle Empfängeradresse bzw. einen speziellen Empfänger zu adressieren Broadcast-Signale 5, 6 aus. In dem 1090 ES-Signal 5, 6 sind Informationen betreffend das Luftfahrzeug 1, 2 enthalten, welches das Signal 5; 6 aussendet. Die Informationen umfassen beispielsweise die Position, die Höhe, die Geschwindigkeit, die Flugrichtung, den Abflugort, den Zielort, das Rufzeichen, die Flugzeugklasse etc. des Luftfahrzeugs 1; 2. Die Höhe und die Geschwindigkeit des Luftfahrzeugs 1, 2 wird anhand geeigneter Erfassungsgeräte an Bord der Luftfahrzeuge 1, 2 ermittelt. Die Position der Luftfahrzeuge 1, 2 wird anhand geeigneter, vorzugsweise satellitengestützter Positionsbestimmungssysteme, beispielsweise mittels Global Positioning System (GPS)-Satelliten, ermittelt. Dabei müssen geeignete Einrichtungen (z.B. eine Satelliten-Empfangsantenne, Rechenmittel, etc.) zur satellitengestützten Positionsbestimmung der Luftfahrzeuge 1, 2 an Bord der Luftfahrzeuge 1, 2 vorhanden sein. Alternativ kann die Positionsbestimmung der Luftfahrzeuge 1, 2 auch mittels anderer Global Navigation Satellite Systems (GNSS) erfolgen, bspw. GLONASS-Satelliten (das russische Pendant zum amerikanischen NAVSTAR-GPS), mittels Galileo-Satelliten, oder mittels Compass-Satelliten einschließlich derer Verbesserungssysteme (WAAS, EGNOS, MTSAT, GAGAN, etc.) erfolgen. Wie die Position der Luftfahrzeuge 1, 2 letzten Endes ermittelt wird, ist nicht von Bedeutung.

Entscheidend ist, dass über das 1090 ES-Broadcast-Signal 5, 6 neben anderen Informationen bezüglich des Luftfahrzeugs 1; 2 einschließlich der aktuellen Flugeigenschaften auch die aktuelle Position des Luftfahrzeugs 1; 2 übermittelt wird.

Die von den Sendeeinheiten 3, 4 ausgesandten Broadcast-Signale 5, 6 werden u. a. auch von den Boden-Empfangsstationen 7, 8 empfangen (vgl. Pfeile 5' und 6'). Es wird ausdrücklich darauf hingewiesen, dass die zur Veranschaulichung gezeichneten Pfeile 5' und 6' nicht bedeuten, dass zwischen den Sendestationen 3, 4 und den Empfangsstationen 7, 8 eine Point-to-Point-Verbindung ausgebildet ist. Ganz im Gegenteil, die Signale 5, 6 sind von jedermann empfangbare Broadcast-Signale. Zumindest ein Teil der in den empfangenen Broadcast-Signalen 5, 6 enthaltenen Informationen bezüglich der Luftfahrzeuge 1, 2 wird über die Verbindungsleitungen 9, 10 an die Flugsicherungs- und/oder Flugleitungszentrale 11 oder andere Organisationen übermittelt, wo sie für eine Weiterverarbeitung zur Verfügung stehen. Durch die in der Zentrale 11 zur Verfügung stehenden Informationen ist eine sog. Air-to-Air Surveillance Application (ASA) sowie eine Air-to-Ground Surveillance Application (GSA) mit hoher Genauigkeit realisierbar.

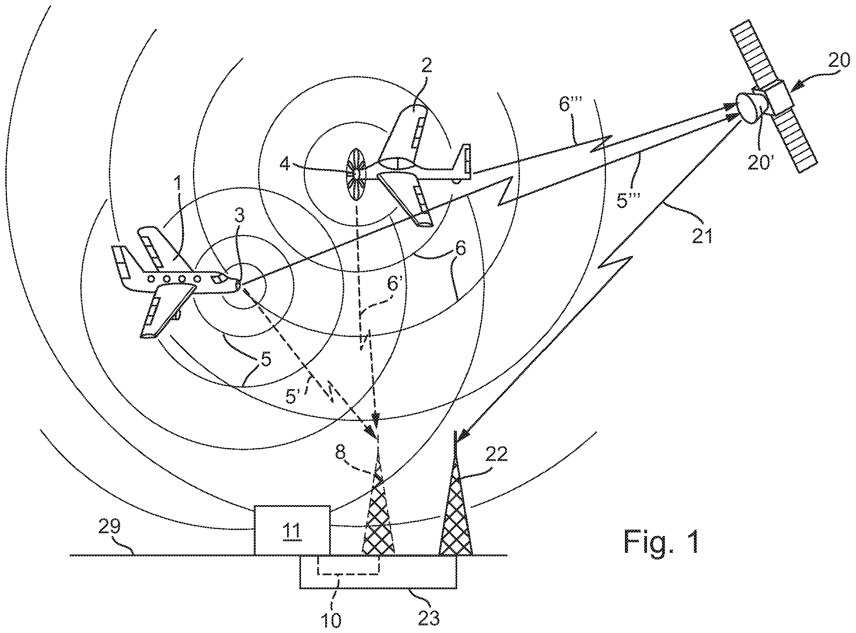

Eine schematische Ansicht einer erfindungsgemäßen Flugsicherungs- und/oder Flugleitungsanordnung gemäß einer ersten bevorzugten Ausführungsform der vorliegenden Erfindung ist in Figur 1 dargestellt. Gleiche Elemente oder Bauteile der erfindungsgemäßen Anordnung sind mit den gleichen Bezugszeichen wie bei der in Figur 3 dargestellten bekannten Anordnung versehen. Ein wesentlicher Unterschied der erfindungsgemäßen Flugsicherungs- und/oder Flugleitungsanordnung gegenüber dem Stand der Technik besteht darin, dass zumindest ein Teil der Empfangsstationen nicht mehr am Boden, sondern im Weltraum angeordnet ist.

In Figur 1 ist beispielhaft lediglich eine Satelliten-Empfangsstation 20 gezeigt, selbstverständlich kann die erfindungsgemäße Anordnung auch wesentlich mehr Satelliten-Empfangsstationen 20 umfassen. Die in Figur 1 dargestellte Satelliten-Empfangsstation 20 umfasst eine Sende-Empfangsantenne 20' sowie eine geeignete Verarbeitungs- und Recheneinheit (nicht dargestellt) zur Verarbeitung der empfangenen 1.090 ES-Broadcast-Signale 5, 6. Der Empfang der von den Sendestationen 3 bzw. 4 ausgesandten Broadcast-Signale 5, 6 durch die Satelliten-Empfangsstation 20 ist in Figur 1 symbolisch durch Pfeile 5"' und 6"' veranschaulicht. Die empfangenen Broadcast-Signale 5, 6 bzw. die darin enthaltenen ADS-B Informationen werden von der Satelliten-Empfangsstation 20 über eine Funkübertragungsstrecke 21 an eine Satelliten-Bodenkontrollstation 22 weitergesendet. Dort werden die ADS-B Daten verarbeitet und für eine Weiterleitung an die Flugsicherungs- und/oder Flugleitungszentrale 11 über eine Verbindung 23 aufbereitet.

Auch bei der erfindungsgemäßen Ausführungsform ist es natürlich möglich, dass das von einem der Luftfahrzeuge 1, 2 ausgesandte Broadcast-Signal 5; 6 durch ein anderes Luftfahrzeug 2; 1 empfangen und dort ausgewertet wird. Die in dem anderen Flugzeug 2; 1 empfangenen Informationen bezüglich des anderen Flugzeugs 1; 2 können zur Realisierung eines Systems zur Verhinderung von Kollisionen zwischen Luftfahrzeugen 1, 2, beispielsweise in Form einer Traffic Collision Avoidance Systems (TCAS) verwendet werden.

Die erfindungsgemäße Überwachungsanordnung stellt Mittel zur Verfügung, um eine weltraumbasierte ADS-B-Überwachung zu realisieren unter Verwendung von Satelliten-Empfangsstationen 20, die 1090 ES-Signale 5, 6 von Luftfahrzeugen 1, 2 empfangen. Des Weiteren kann die Anordnung auch ein ADS-B Rebroadcast (ADS-R) und ein Flight Information Broadcast (FIS-B) unter Verwendung des 1.090 ES-Signals 5, 6 über Satelliten-Empfangsstationen 20 zur Verfügung stellen.

Die weltraumbasierte ADS-B-Überwachung kann eine bestehende bodenbasierte ADS-B-Überwachung (mit Boden-Empfangsstationen 7, 8) ergänzen bzw. verbessern. Eine entsprechende, beispielhaft dargestellte bodenbasierte Empfangsstation 8 zum Empfang von ADS-B Broadcast Signalen 5', 6' ist in Figur 1 gestrichelt dargestellt. Alternativ kann erfindungsgemäß eine globale ADS-B-Überwachung realisiert werden, welche Satelliten-Empfangsstationen 20 als einzige Empfangsstationen, d. h. keine zusätzlichen bodenbasierten Empfangsstationen 8, umfasst.

Zusätzlich zu Flugsicherungs- und/oder Flugleitungsfunktionen (sog. Air Traffic Control (ATC) Tasks), können die empfangenen ADS-B-Daten anderen Nutzern zur Verfügung gestellt und von diesen verwendet werden. So ist es beispielsweise denkbar, die ADS-B-Informationen auch dazu einzusetzen, einer Airline die aktuelle Position ihrer Luftfahrzeuge 1, 2 zur Verfügung zu stellen. Dies kann im Falle von Verspätungen von Linien-Luftfahrzeugen 1, 2 oder aber in einem Notfall hilfreich sein. Die Airline kann dadurch den Einsatz ihrer Luftfahrzeuge wesentlich besser, vorausschauender und effizienter planen.

ADS-B umfasst eine regelmäßige, unaufgeforderte Übertragung von Daten bzw. Informationen bezüglich eines Luftfahrzeugs 1; 2, die an Bord des Luftfahrzeugs 1, 2 zur Verfügung stehen. Die übermittelten Informationen umfassen Überwachungsdaten, wie beispielsweise die Position, die Höhe, die Geschwindigkeit, die Richtung, ein Rufzeichen des Luftfahrzeugs 1, 2, die Luftfahrzeugklasse und andere. ADS-B Signale 5, 6 werden spontan, selbständig, regelmäßig und ohne eine besondere Empfangsadresse übermittelt. Insofern unterscheiden sich die ADS-B-Signale von ADS-Contract (ADS-C) Nachrichten, die über eine Point-to-Point-Verbindung zu geostationären Kommunikationssatelliten übertragen werden. Die geostationären Kommunikationssatelliten befinden sich in einer Umlaufbahn von einigen zehntausend Metern oberhalb der Erdoberfläche 29, insbesondere in etwa 36000 Kilometern oberhalb der Erdoberfläche 29. Die Point-to-Point-Kommunikationsverbindung ist kostenpflichtig und relativ teuer, so dass zur Übermittlung der Informationen eines Luftfahrzeugs 1, 2 während eines längeren Interkontinentalflugs allein aufgrund der erforderlichen Übertragungszeiten für die Luftfahrzeug-Informationen relativ hohe Kosten entstehen, die von den Airlines und letzten Endes von den Nutzern der Luftfahrzeuge 1, 2 (den Passagieren oder den Luftfracht-Kunden) nicht akzeptiert würden. Gegenüber der ADS-C-Überwachung des Luftraums bietet die erfindungsgemäß vorgeschlagene weltraumbasierte ADS-B-Überwachung deutliche Vorteile hinsichtlich einer möglichst einfachen und kostengünstigen Überwachung der Luftfahrzeuge 1, 2.

Schließlich erlaubt die vorliegende Erfindung auch die Realisierung von sog. Air-to-Ground-Surveillance Applications (GSA) in Regionen, die nicht durch Primär- und/oder Sekundärradar abgedeckt sind. Auch ohne Radar-Abdeckung ist in diesen Regionen mit der erfindungsgemäßen weltraumbasierten ADS-B-Überwachung eine ATC-Überwachung realisierbar. Dies ist insbesondere in Regionen interessant, wo ADS-B Boden-Empfangsstationen 7, 8 nur mit großem Aufwand bzw. sogar gar nicht angeordnet werden können.

Mit der vorliegenden Erfindung ist es zudem erstmals möglich, den Luftraum auch in niedrigeren Flughöhen kontinuierlich zu überwachen. Eventuell kann eine Überwachung realisiert werden, die bis hinab auf die Erdoberfläche 29, beispielsweise bis auf die Landebahn eines Flughafens, reichen kann. Dies wird dadurch erreicht, dass sich die Satelliten-Empfangsstationen 20 oberhalb der Luftfahrzeuge 1, 2 befinden und - anders als die bisher eingesetzten Radar- und ADS-B Boden-Empfangsstationen 7, 8 - keine terrestrischen Systeme sind, die aufgrund der Erdkrümmung und auch durch Hindernisse, bspw. Gebäude, Vegetation oder Hügel und Berge, im Empfang der Broadcast-Signale 5, 6 behindert werden können.

So wie die terrestrische ADS-B Überwachung könnte auch das erfindungsgemäß vorgeschlagene weltraumbasierte ADS-B-System ein wesentlicher Bestandteil des US Next Generation Air Transportation Systems (NextGen), des Australian Air Traffic Surveillance Systems sowie entsprechender weiterer Systeme in Europa, Asien und anderen Teilen der Welt werden. Es ist davon auszugehen, dass die weltraumbasierte ADS-B-Überwachung in Zukunft eine entscheidende Komponente der Luftverkehrsüberwachung in der Welt wird. Die Erfindung stellt eine verbesserte Überwachung der Luftfahrzeuge 1, 2 im Luftraum sowie eine verbesserte Erkenntnis über den aktuellen Luftverkehr in dem umgebenden Luftraum sowohl für Piloten als auch für Fluglotsen zur Verfügung. Das weltraumbasierte ADS-B ist dafür ausgelegt, die Sicherheit, die Kapazität und die Effizienz der regionalen Luftüberwachungen zu verbessern und gleichzeitig eine flexible, ohne großen Aufwand erweiterbare Plattform zur Verfügung zu stellen, um Möglichkeiten für zukünftiges Wachstum im Luftverkehr zu berücksichtigen.

Durch den Einsatz von Satelliten-Empfangsstationen 20 werden die Vorteile einer ADS-B insbesondere auch für solche Regionen problemlos und kostengünstig realisierbar, in denen bisher eine ADS-B-Überwachung nur mit großem Aufwand oder gar nicht realisierbar war, beispielsweise im Bereich von Meeren oder Ozeanen oder in Regionen mit einer schwachen Infrastruktur. Zusätzlich zu den Luftverkehrsüberwachungsfunktionen kann der Airline eine globale Überwachung ihrer eigenen Luftverkehrsflotte ermöglicht werden.

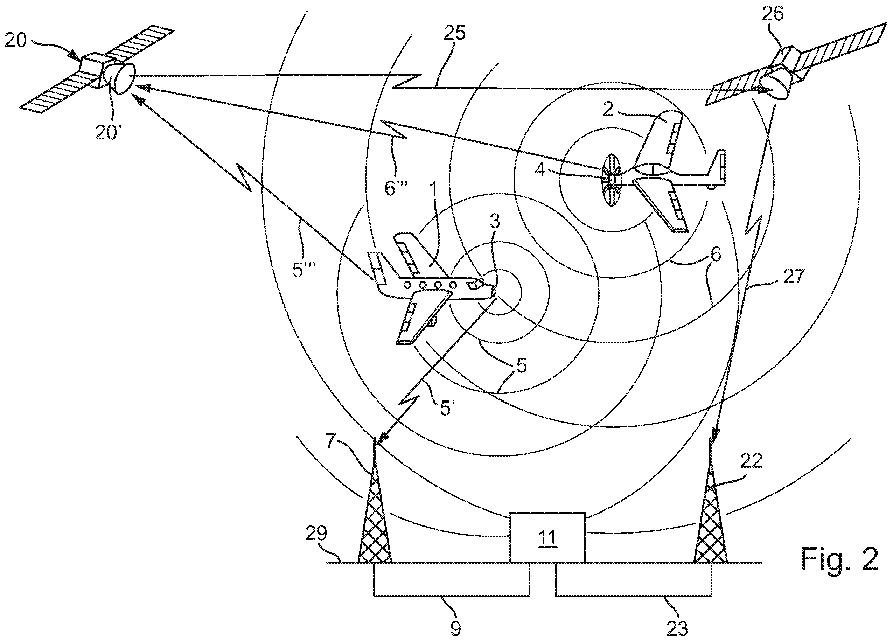

In Figur 2 ist ein weiteres bevorzugtes Ausführungsbeispiel der vorliegenden Erfindung dargestellt. Dieses Ausführungsbeispiel unterscheidet sich von dem ersten Ausführungsbeispiel aus Figur 1 insbesondere dadurch, dass die von der Satelliten-Empfangsstation 20 empfangenen Broadcast-Signale 5, 6 bzw. die darin enthaltenen Informationen von der Satelliten-Empfangsstation 20 nicht direkt zurück zur Erdoberfläche (zur Satelliten-Bodenkontrollstation 22), sondern über eine Funkverbindung 25 zunächst an einen anderen Satelliten 26 übertragen werden. Das von der Satelliten-Empfangsstation 20 empfangene Broadcast-Signal 5, 6 bzw. die darin enthaltenen Informationen können von dem weiteren Satelliten 26 aus entweder nochmals an weitere Satelliten (nicht gezeigt) oder aber zur Satelliten-Bodenkontrollstation 22 übertragen werden. Der weitere Satellit 26 kann ebenfalls eine Empfangsstation für die 1.090 ES Broadcast-Signale 5, 6 der Luftfahrzeuge 1, 2 umfassen. Es ist aber auch denkbar, dass der weitere Satellit 26 - wie in dem in Figur 2 dargestellten Ausführungsbeispiel - einfach als Relaisstation zum Empfang der Signale von der Satelliten-Empfangsstation 20 über die Funkverbindung 25 und zur Weiterleitung der in dem Signal enthaltenen Informationen an die Satelliten-Bodenkontrollstation 22 dient, ohne dass der Satellit 26 selbst von den Luftfahrzeugen 1, 2 ausgesandte 1.090 ES Broadcast-Signale 5, 6 empfangen kann.

In dem in Figur 2 dargestellten Ausführungsbeispiel werden die Broadcast-Signale 5, 6 bzw. die darin enthaltenen Informationen über eine Funkverbindung 27 von dem Satelliten 26 an die Satelliten-Bodenkontrollstation 22 gesendet. Die über die Funkverbindung 27 empfangenen Informationen über die Luftfahrzeuge 1, 2, die in den von der Satelliten-Empfangsstation 20 empfangenen Broadcast-Signalen 5"', 6'" enthalten waren, werden von der Bodenkontrollstation 22 über eine Leitung 23 an die Flugsicherungs- und/oder Flugleitungszentrale 11 übertragen. Alternativ wäre auch eine Funkübertragung zwischen der Bodenkontrollstation 22 und der Zentrale 11 denkbar.

Die Übermittlung der von einer Satelliten-Empfangsstation 20 empfangenen Broadcast-Signale 5"', 6'" zur Flugsicherungs- und/oder Flugleitungszentrale 11 mittelbar über weitere Satelliten ist insbesondere in Regionen vorteilhaft, in denen die nächste Satelliten-Bodenkontrollstation 22 zum Empfangen der Funksignale 27 außer Reichweite des die Broadcast-Signale 5"', 6'" empfangenden Satelliten angeordnet ist, wie beispielsweise im Bereich von Meeren und Ozeanen.

## Patentansprüche

1. Anordnung zur Flugsicherung und/oder Flugleitung von Luftfahrzeugen (1, 2), wobei
die Anordnung zum Einsatz einer Automatic Dependent Surveillance-Broadcast, ADS-B, Überwachung ausgebildet ist und mehrere zueinander beabstandete Empfangsstationen (20, 26), die jeweils zum Empfangen eines ADS-B Broadcast-Signals (5, 6) ausgebildet sind, das von einer Sendestation (3, 4) eines zu sichernden und/oder zu leitenden Luftfahrzeugs (1, 2) ausgesandt wurde, und bodengestützte Verarbeitungsmittel zum Verarbeiten des empfangenen Broadcast-Signals (5, 6) umfasst, **dadurch gekennzeichnet,**
**dass** die Empfangsstationen (20, 26) dazu ausgebildet sind, ein 1090 MHz Mode S Extended Squitter, 1090 MS ES, Signal als ADS-B Broadcast-Signal (5, 6) zu empfangen, und
**dass** zumindest ein Teil der Empfangsstationen (20, 26) jeweils auf einem Satelliten angeordnet ist, welche dazu ausgebildet sind, das ADS-B Broadcast-Signal (5, 6) zu empfangen und zumindest einen Teil der darin enthaltenen Daten über eine Funkübertragungsstrecke (21; 25, 27) an eine Satelliten-Bodenkontrollstation und weiter an eine Flugsicherungs- und/oder Flugleitungszentrale (11) oder andere Organisationen weiterzuleiten, wobei
die Satelliten-Empfangsstationen (20, 26) mindestens eine Sendeeinheit aufweisen, die dazu ausgebildet ist, ein weiteres Broadcast-Signal mit Informationen über die Position von Luftfahrzeugen in Form von Traffic Information Services-Broadcast (TIS-B) zu senden.

2. Anordnung nach Anspruch 1, **dadurch gekennzeichnet, dass** zumindest einige der Satelliten als Low Earth Orbiting, LEO, Satelliten ausgebildet sind.

3. Anordnung nach Anspruch 1 oder 2, **dadurch gekennzeichnet, dass** zumindest einige der Satelliten als Medium Earth Orbiting, MEO, Satelliten ausgebildet sind.

4. Anordnung nach einem der Ansprüche 1 bis 3, **dadurch gekennzeichnete dass** zumindest einige der Satelliten als geostationäre, GEO, Satelliten ausgebildet sind.

5. Anordnung nach einem der Ansprüche 1 bis 4, **dadurch gekennzeichnet, dass** die in dem ADS-B Broadcast-Signal (5, 6) enthaltenen Informationen Daten oder Informationen bezüglich des Luftfahrzeugs (1, 2) umfassen, welches das ADS-B Broadcast Signal (5, 6) ausgesandt hat, die an Bord des Luftfahrzeugs (1, 2) zur Verfügung stehen.

6. Anordnung nach Anspruch 5, **dadurch gekennzeichnete dass** die in dem ADS-B Broadcast Signal (5, 6) enthaltenen Informationen eine Position, eine Höhe, eine Geschwindigkeit, eine Richtung, ein Rufzeichen und/oder eine Luftfahrzeugklasse des Luftfahrzeugs (1, 2) umfassen, welches das ADS-B Broadcast Signal (5, 6) ausgesandt hat.

7. Anordnung nach einem der Ansprüche 1 bis 6, **dadurch gekennzeichnet, dass** die bodengestützten Verarbeitungsmittel (11) die extrahierten Daten Nutzern zur Verfügung stellen.

8. Verfahren zur Flugsicherung und/oder Flugleitung von Luftfahrzeugen (1, 2) unter Einsatz einer Automatic Dependent Surveillance-Broadcast, ADS-B, Überwachung, umfassend:
Empfangen eines ADS-B Broadcast-Signals (5,□6), das von einer Sendestation (3, 4) eines zu sichernden und/oder zu leitenden Luftfahrzeugs (1, 2) ausgesandt wurde, durch mindestens eine von mehreren zueinander beabstandeten Empfangsstationen (20, 26) und Verarbeiten des empfangenen Broadcast-Signals (5, 6) durch bodengestützte Verarbeitungsmittel (11), **dadurch gekennzeichnet,**
**dass** die Empfangsstationen (20, 26) ein 1090 MHz Mode S Extended Squitter, 1090 MS ES, Signal als ADS-B Broadcast-Signal (5, 6) empfangen und dass das ADS-B Broadcast-Signal (5, 6) durch mindestens eine von mehreren jeweils auf einem Satelliten ausgebildete Empfangsstation (20, 26) empfangen wird und zumindest einen Teil der darin enthaltenen Daten über eine Funkübertragungsstrecke (21; 25, 27) an eine Satelliten- Bodenkontrollstation und weiter an eine Flugsicherungs- und/oder Flugleitungszentrale (11) oder andere Organisationen weitergeleitet wird, wobei
die Satelliten-Empfangsstationen (20, 26) mindestens eine Sendeeinheit aufweisen, die ein weiteres Broadcast-Signal mit Informationen über die Position von Luftfahrzeugen in Form von Traffic Information Services-Broadcast (TIS-B) sendet.

## Claims

1. A system for air traffic control and/or air traffic management for aircraft (1, 2),
the system being designed for use of Automatic Dependent Surveillance-Broadcast (ADS-B) monitoring and comprising a plurality of receiving stations (20, 26), which are spaced apart from one another and are each designed to receive an ADS-B broadcast signal (5, 6) emitted by a transmitting station (3, 4) of an aircraft (1, 2) requiring air traffic control and/or air traffic management, and ground-based processing means for processing the received broadcast signal (5, 6),
**characterized in that** the receiving stations (20, 26) are designed to receive a 1090 MHz Mode S extended squitter, 1090 MS ES, signal as the ADS-B broadcast signal (5, 6), and
at least some of the receiving stations (20, 26) are disposed on a respective satellite, which are designed to receive the ADS-B broadcast signal (5, 6) and forward at least some of the data contained therein via a radio transmission link (21; 25, 27) to a satellite ground control station, and onward to an air traffic control and/or air traffic management center (11) or other organizations,
the satellite receiving stations (20, 26) comprising at least one transmitting unit, which is designed to transmit another broadcast signal including information about the positions of aircraft in the form of Traffic Information Services Broadcast (TIS-B).

2. The system according to claim 1, **characterized in that** at least some of the satellites are designed as low earth orbit (LEO) satellites.

3. The system according to claim 1 or 2, **characterized in that** at least some of the satellites are designed as medium earth orbit (MEO) satellites.

4. The system according to any one of claims 1 to 3, **characterized in that** at least some of the satellites are designed as geostationary (GEO) satellites.

5. The system according to any one of claims 1 to 4, **characterized in that** the information contained in the ADS-B broadcast signal (5, 6) includes data or information with respect to the aircraft (1, 2) that emitted the ADS-B broadcast signal (5, 6), which is available on board the aircraft (1, 2).

6. The system according to claim 5, **characterized in that** the information contained in the ADS-B broadcast signal (5, 6) includes a position, an altitude, a speed, a direction, a call signal and/or an aircraft class of the aircraft (1, 2) that emitted the ADS-B broadcast signal (5, 6).

7. The system according to any one of claims 1 to 6, **characterized in that** the ground-based processing means (11) provide the extracted data to users.

8. A method for air traffic control and/or air traffic management of aircraft (1, 2) using Automatic Dependent Surveillance-Broadcast (ADS-B) monitoring, including:
receiving an ADS-B broadcast signal (5, 6), which was emitted by a transmitting station (3, 4) of an aircraft (1, 2) requiring air traffic control and/or air traffic management, by at least one of a plurality of receiving stations (20, 26) that are spaced apart from one another, and
processing the received broadcast signal (5, 6) by ground-based processing means (11),
**characterized in that** the receiving stations (20, 26) receive a 1090 MHz Mode S extended squitter, 1090 MS ES, signal as the ADS-B broadcast signal (5, 6), and the ADS-B broadcast signal (5, 6) is received by at least one of a plurality of receiving stations (20, 26) disposed on a respective satellite, and at least some of the data contained therein is forwarded via a radio transmission link (21; 25, 27) to a satellite ground control station, and onward to an air traffic control and/or air traffic management center (11) or other organizations,
the satellite receiving stations (20, 26) comprising at least one transmitting unit, which transmits another broadcast signal including information about the positions of aircraft in the form of Traffic Information Services Broadcast (TIS-B).

## Revendications

1. Système destiné à assurer la sécurité des vols et/ou à guider le trafic d'aéronefs (1, 2), où le système est conçu pour l'emploi dans un contrôle d'un système de positionnement par satellite ADS-B et comprend plusieurs stations de réception (20, 2) espacées les unes par rapport aux autres qui sont respectivement conçues pour la réception d'un signal de radiodiffusion (5, 6) ADS-B qui a été émis par une station émettrice (3, 4) d'un aéronef (1, 2) dont il faut assurer la sécurité et/ou à guider, et des moyens de traitement assistés par le sol pour le traitement du signal de radiodiffusion (5, 6) à réceptionner, **caractérisé en ce**
**que** les stations de réception (20, 26) sont conçues pour réceptionner un signal de squitter étendu en mode S, un signal 1090 MS ES, en tant que signal de radiodiffusion (5, 6) ADS-B, et
**qu'**au moins une partie des stations de réception (20, 26) est disposée sur un satellite, lesquelles sont conçues pour recevoir le signal de radiodiffusion (5, 6) et au moins une partie des données y étant contenues par l'intermédiaire d'une voie de transmission (21 ; 25, 27) à une station de contrôle satellite au sol et pour transmettre au delà à une centrale de sécurité des vols et/ou de guidage des vols (11) ou à une autre organisation, où
les stations de réception des satellites (20, 26) présentent au moins une unité d'émission qui est conçue pour transmettre un autre signal de radiodiffusion avec des informations sur la position d'aéronefs sous la forme d'un signal d'un service de radiodiffusion d'information sur le trafic (TTS-B).

2. Système selon la revendication 1, **caractérisé en ce qu'**au moins quelques uns des satellites sont conçus comme des satellites à faible orbite terrestre LEO.

3. Système selon la revendication 1 ou2, **caractérisé en ce qu'**au moins quelques uns des satellites sont conçus comme des satellites à moyenne orbite terrestre MEO.

4. Système selon l'une des revendications 1 à 3, **caractérisé en ce qu'**au moins quelques uns des satellites sont conçus comme des satellites géostationnaires GEO.

5. Système selon l'une des revendications 1 à 4, **caractérisé en ce que** les informations contenues dans le signal de radiodiffusion (5, 6) ADS-B comprennent des données ou des informations concernant l'aéronef (1, 2), lequel a envoyé le signal de radiodiffusion ADS-B (5, 6), qui sont disponibles à bord de l'aéronef (1, 2).

6. Système selon la revendication 5, **caractérisé en ce que** les informations contenues dans le signal de radiodiffusion (5, 6) ADS-B comprennent une position, une altitude, une vitesse, une direction, un indicatif d'appel et/ou une classe d'aéronefs de l'aéronef (1, 2), laquelle a été envoyée par le signal de radiodiffusion (5, 6) ADS-B.

7. Système selon l'une des revendications 1 à 6, **caractérisé en ce que** les moyens de traitement assistés du sol (11) mettent à disposition des utilisateurs les données extraites.

8. Procédé pour assurer la sécurité des vols et/ou le guidage des vols d'aéronefs (1, 2) moyennant l'emploi d'une surveillance par radiodiffusion automatique ADS-B, comprenant :
la réception d'un signal de radiodiffusion ADS-B (5, 6) qui a été émis par une station émettrice (3, 4) d'un aéronef (1, 2) dont il faut assurer la sécurité et/ou guider, par au moins une parmi plusieurs stations émettrices (20, 26) espacées les unes des autres et le traitement du signal de radiodiffusion (5, 6) reçu par des moyens de traitement assistés du sol (11), **caractérisé en ce**
**que** les stations de réception (20, 26) réceptionnent un signal de squitter étendu en mode S, un signal 1090 MS ES, en tant que signal de radiodiffusion (5, 6) ADS-B et que le signal de radiodiffusion (5, 6) ADS-B est reçu par au moins une parmi plusieurs stations de réception (20, 26) respectives formées sur un satellite et au moins une partie des données qui y sont contenues est transmise par l'intermédiaire d'une voie de transmission radio (21 ; 25, 27) à une station de contrôle au sol du satellite et au-delà à une centrale d'assurance de la sécurité des vols et/ou de guidage des vols (11), ou à une autre organisation, où
les stations de réception des satellites (20, 26) présentent au moins une unité émettrice qui envoie un autre signal de radiodiffusion avec des informations sur la position d'aéronefs sous la forme d'un service de radiodiffusion d'informations sur le trafic (TIS-B).
